# EUROPÄISCHE PATENTSCHRIFT

(11) **EP 2 209 827 B1**
(45) Veröffentlichungstag und Bekanntmachung des Hinweises auf die Patenterteilung: **25.05.2016**
(21) Anmeldenummer: 08849359.8
(22) Anmeldetag: 13.11.2008
(51) Int. Cl.: C08G 18/12

(54) **GESCHÄUMTE POLYURETHANE MIT VERBESSERTEN DAUERBIEGEEIGENSCHAFTEN**
FOAMED POLYURETHANES HAVING IMPROVED FLEXURAL ENDURANCE PROPERTIES
MOUSSES DE POLYURÉTHANES AYANT DES PROPRIÉTÉS AMÉLIORÉES D'ENDURANCE À LA FLEXION

(30) Priorität: 14.11.2007 EP 07120716
(43) Veröffentlichungstag der Anmeldung: 28.07.2010
(73) Patentinhaber: BASF SE, 67056 Ludwigshafen am Rhein (DE)
(72) Erfinder: MOHMEYER, Nils, 49076 Osnabrück (DE); FREIDANK, Daniel, 49448 Lemförde (DE); SCHÖPS, Sibylle, 48165 Münster (DE); EMGE, Andreas, 49448 Lemförde (DE); LÖFFLER, Achim, 67346 Speyer (DE); ORTALDA, Marco, I-10137 Torino (IT)
(74) Vertreter: BASF IP Association
(86) Internationale Anmeldenummer: PCT/EP2008/065467
(87) Internationale Veröffentlichungsnummer: WO 2009/063004

(56) Entgegenhaltungen:
- WO-A-99/05195
- WO-A-99/33893
- WO-A-2005/116101
- DE-A1- 4 032 148
- DE-A1- 10 248 949

## Beschreibung

Die vorliegende Erfindung betrifft geschäumtes Polyurethan, erhältlich durch Vermischen von a) Polyisocyanaten, b) höhermolekulare Verbindungen mit gegenüber Isocyanatgruppen reaktiven Gruppen, c) Feststoffpartikel, der ein radikalisch polymerisiertes Polymer ist und in b) dispergiert vorliegt der ein radikalisech polymerisiertes Polyler ist und in b) dispeigiert vorliegt, d) Treibmittel, e) gegebenenfalls Kettenverlängerungsmittel, Vernetzungsmittel oder Mischungen davon, f) gegebenenfalls Katalysator und g) gegebenenfalls sonstige Zusatzstoffe, zu einer Reaktionsmischung und ausreagieren lassen der Reaktionsmischung, wobei der Anteil an Kettenverlängerungsmittel kleiner als 4 Gew.-%, bezogen auf das Gesamtgewicht der Komponenten a) bis f), ist, der Gehalt an Feststoffpartikeln größer 15 Gew.-%, bezogen auf das Gesamtgewicht der Komponenten a) bis f), ist und die mittlere Funktionalität der höhermolekularen Verbindungen mit gegenüber Isocyanatgruppen reaktiven Gruppen kleiner als 2,5 ist. Weiter betrifft die vorliegende Erfindung einen Formkörper, enthaltend ein erfindungsgemäßes geschäumtes Polyurethan, ein Verfahren zur Herstellung des erfindungsgemäßen geschäumten Polyurethans und die Verwendung eines erfindungsgemäßen Formkörpers als Schuhsohle.

Weitere Ausführungsformen der vorliegenden Erfindung sind den Ansprüchen, der Beschreibung und den Beispielen zu entnehmen. Es versteht sich, dass die vorstehend genannten und die nachstehend noch zu erläuternden Merkmale des erfindungsgemäßen Gegenstandes nicht nur in der jeweils angegebenen Kombination, sondern auch in anderen Kombinationen verwendbar sind, ohne den Rahmen der Erfindung zu verlassen.

Polyurethane werden heutzutage aufgrund ihres weiten Eigenschaftsprofils in einer Vielzahl von Anwendungen eingesetzt. Polyurethane können dabei sowohl in kompakter als auch in geschäumter Form eingesetzt werden. Insbesondere mikrozelluläre Elastomere und Integralschaumstoffe treten dabei in Konkurrenz zu Gummi. So sind aus EP 1042384 geschäumte Polyurethane mit einer Dichte von 150 bis 500 g/L für Schuhsohlen beschrieben, die erhalten werden, indem eine Polyolkomponente, enthaltend ein Polyetherpolyol mit 2 oder mehr Hydroxylgruppen, ein Polymer-Polyol, enthaltend Polymerpartikel, sowie Kettenverlängerungsmittel, in Gegenwart von Treibmittel mit Polyisocyanaten umgesetzt werden. Der Anteil an Polymerpartikeln beträgt dabei 10 bis 30 Gew.-%, bezogen auf das Gesamtgewicht des Polyetherpolyols und des Polymer-Polyols. In den Beispielen werden hauptsächlich trifunktionale Polyole eingesetzt.

Gegenüber Gummi haben solche Polyurethane den Vorteil, dass die geforderten mechanischen Eigenschaften wie z.B. Zugfestigkeit oder Reißdehnung bei geringeren Dichte als Gummi erreicht werden können und der zeitintensive Schritt der Gummivulkanisation entfällt; Gummi dagegen hat den Vorteil einer besseren Rutschfestigkeit, insbesondere einer besseren Nassrutschfestigkeit, besserer Dauerbiegeeigenschaften, insbesondere bei tiefen Temperaturen und einer besseren Haptik, das heißt, das Gefühl beim Berühren ist angenehmer.

Aufgabe der vorliegenden Erfindung war es, Polyurethane zu liefern, die eine verbesserte Rutschfestigkeit, insbesondere Nassrutschfestigkeit, bessere Biegeeigenschaften, auch bei niedrigen Temperaturen, und eine gummiähnliche Haptik aufweisen.

Die erfindungsgemäße Aufgabe wurde gelöst durch geschäumtes Polyurethan, erhältlich durch Vermischen von a) Polyisocyanaten, b) höhermolekulare Verbindungen mit gegenüber Isocyanatgruppen reaktiven Gruppen, c) Feststoffpartike , d) Treibmittel, e) gegebenenfalls Kettenverlängerungsmittel, Vernetzungsmittel oder Mischungen davon, f) gegebenenfalls Katalysator und g) gegebenenfalls sonstige Zusatzstoffe, zu einer Reaktionsmischung und ausreagieren lassen der Reaktionsmischung, wobei der Anteil an Kettenverlängerungsmittel kleiner als 4 Gew.-%, bezogen auf das Gesamtgewicht der Komponenten a) bis f), ist, der Gehalt an Feststoffpartikeln größer 15 Gew.-%, bezogen auf das Gesamtgewicht der Komponenten a) bis f), ist und die mittlere Funktionalität der höhermolekularen Verbindungen mit gegenüber Isocyanatgruppen reaktiven Gruppen kleiner als 2,5 ist.

Geschäumtes Polyurethan ist bekannt und umfasst Schaumstoffe gemäß DIN 7726 von allen bekannten Polyisocyanat-Polyadditionsprodukten sowie von Polymerblends, enthaltend mindestens 50 Gew.-% Polyisocyanat-Polyadditionsprodukte. Die Rohdichte des geschäumten Polyurethans beträgt dabei gemäß DIN EN ISO 845 150 g/L bis 1100 g/L, vorzugsweise 200 bis 1000 g/L und besonders bevorzugt 500 bis 950 g/L

Vorzugsweise wird das geschäumte Polyurethan in Form von elastischen Schaumstoffen und insbesondere von elastischen Polyurethanformkörpern mit kompakter Oberfläche und zelligem Kern, sogenannte Polyurethanintegralschaumstoffe eingesetzt. Polyurethanintegralschaumstoffe und ihre Herstellung sind seit langem bekannt und beispielsweise in Modern Shoemaking No.61: Solings, November 2001, Stephen Abbott and Mike George, Satra Technology Centre 2001 beschrieben. Polyurethanintegralschaumstoffe werden in unterschiedlichen Bereichen angewendet. Eine typische Verwendung ist die als Schuhsohle, zum Beispiel für Straßenschuhe, Sportschuhe, Sandalen und Stiefel aber auch im Bereich von Automobilinnenausstattung, wie Lenkräder Kopfstützen, Autotürenseitenteile, Autoinstrumententafeln, Automittelkonsolen oder Schaltknöpfe. Weitere mögliche Anwendungen sind Stuhlarmlehnen oder als Motorradsitze.

Als Polyurethanintegralschaumstoffe werden im Rahmen der Erfindung Polyurethanschaumstoffe nach DIN 7726 mit zelligem Kern und kompakter Oberfläche verstanden, wobei die Randzone, bedingt durch den Formgebungsprozess, eine höhere Dichte als der Kern aufweist. Die über den Kern und die Randzone gemittelte Gesamtrohdichte liegt dabei gemäß DIN EN ISO 845 bei 150 bis 1100 g/L, bevorzugt 200 bis 1000 g/L und insbesondere 500 bis 950 g/L.

Polyisocyanate (a) umfassen die aus dem Stand der Technik bekannten aliphatischen, cycloaliphatischen und aromatischen zwei- oder mehrwertigen Isocyanate (Bestandteil a-1) sowie beliebige Mischungen daraus. Beispiele sind 4,4'-Diphenylmethandiisocyanat, 2,4'-Diphenylmethandiisocyanat, die Mischungen aus monomeren Diphenylmethandiisocyanaten und höherkernigen Homologen des Diphenylmethandiisocyanats (Polymer-MDI), Tetramethylendiisocyanat, Hexamethylendiisocyanat (HDI), Isophorondiisocyanat (IPDI), 2,4- oder 2,6-Toluylendiisocyanat (TDI) oder Mischungen der genannten Isocyanate.

Bevorzugt wird 4,4'-MDI verwendet. Das bevorzugt verwendete 4,4'-MDI kann 0 bis 20 Gew.-% 2,4' MDI und geringe Mengen, bis etwa 10 Gew.-%, allophanat- oder uretoniminmodifizierte Polyisocyanate enthalten. Es können auch geringe Mengen Polyphenylenpolymethylenpolyisocyanat (Polymer-MDI) eingesetzt werden. Die Gesamtmenge dieser hochfunktionellen Polyisocyanate sollte 5 Gew.-% des eingesetzten Isocyanats nicht überschreiten.

Die Polyisocyanatkomponente (a) wird bevorzugt in Form von Polyisocyanatprepolymeren eingesetzt. Diese Polyisocyanatprepolymere sind erhältlich, indem vorstehend beschriebene Polyisocyanate (a-1), beispielsweise bei Temperaturen von 30 bis 100 °C, bevorzugt bei etwa 80 °C, mit Polyolen (a-2), zum Prepolymer umgesetzt werden. Vorzugsweise wird zur Herstellung der erfindungsgemäßen Prepolymere 4,4'-MDI zusammen mit uretoniminmodifiziertem MDI und handelsüblichen Polyolen auf Basis von Polyestern, beispielsweise ausgehend von Adipinsäure, Polyethern, beispielsweise ausgehend von Ethylenoxid und/oder Propylenoxid bzw. Polytetrahydrofuran (PTHF), oder Polycarbonatole, wie beispielsweise in der europäischen Patentanmeldung EP 07101407.0 beschrieben, verwendet.

Polyole (a-2) sind dem Fachmann bekannt und beispielsweise beschrieben im "Kunststoffhandbuch, Band 7, Polyurethane", Carl Hanser Verlag, 3. Auflage 1993, Kapitel 3.1.

Prepolymere auf Etherbasis werden vorzugsweise erhalten durch Umsetzung von Polyisocyanaten (a-1), besonders bevorzugt 4,4'-MDI, mit 2- bis 3-funktionellen Polyoxypropylen- und/oder Polyoxypropylen-Polyoxyethylenpolyolen. Ihre Herstellung erfolgt zumeist durch die allgemein bekannte basisch katalysierte Anlagerung von Propylenoxid allein, im Gemisch mit Ethylenoxid oder blockweise an H-funktionelle, insbesondere OH-funktionelle Startsubstanzen. Als Startsubstanzen dienen beispielsweise Wasser, Ethylenglykole oder Propylenglykole beziehungsweise Glycerin oder Trimethylolpropan. Weiter können als Katalysatoren auch Multimetallcyanidverbindungen, sogenannte DMC-Katalysatoren, eingesetzt werden. Desweiteren können als Katalysatoren aus Lewis-Säuren, wie Bortrifluorid, eingesetzt werden. Vorzugsweise werden als Komponente (a-2) Polyether verwendet, wie sie nachstehend unter b) beschrieben sind.

Bei Verwendung von Ethylenoxid/Propylenoxidmischungen wird das Ethylenoxid bevorzugt in einer Menge von 10-50 Gew.-%, bezogen auf die Gesamtmenge an Alkylenoxid, eingesetzt. Der Einbau der Alkylenoxide kann hierbei blockweise oder als statistisches Gemisch erfolgen. Besonders bevorzugt ist der Einbau eines Ethylenoxid-Endblocks ("EO-cap"), um den Gehalt an reaktiveren primären OH-Endgruppen zu erhöhen. Das zahlenmittlere Molekulargewicht der Polyole (a-2) liegt vorzugsweise zwischen 400 und 4500 g/mol.

Gegebenenfalls werden den genannten Polyolen bei der Herstellung der Isocyanatprepolymere übliche Kettenverlängerungsmittel oder Vernetzungsmittel zugegeben. Solche Substanzen sind im Folgenden unter e) beschrieben. Besonders bevorzugt werden als Kettenverlängerungsmittel oder Vernetzungsmittel Dipropylenglycol oder Tripropylenglycol eingesetzt.

Höhermolekulare Verbindungen b) mit gegenüber Isocyanatgruppen reaktiven Gruppen haben ein Molekulargewicht von größer 400 g/mol, Vorzugsweise ist das Molekulargewicht größer 550 g/mol und können beispielsweise Polyetherole, Polyesterole oder Polycarbonatole sein, wobei die mittlere Funktionalität der höhermolekularen Verbindungen mit gegenüber Isocyanatgruppen reaktiven Gruppen kleiner als 2,5 ist.

Polyetherole werden nach bekannten Verfahren hergestellt, beispielsweise durch anionische Polymerisation mit Alkalihydroxiden oder Alkalialkoholaten als Katalysatoren und unter Zusatz mindestens eines Startermoleküls, das 2 bis 3 gegenüber Isocyanatgruppen reaktive Wasserstoffatome gebunden enthält, oder durch kationische Polymerisation mit Lewis-Säuren, wie Antimonpentachlorid oder Borfluorid-Etherat aus einem oder mehreren Alkylenoxiden mit 2 bis 4 Kohlenstoffatomen im Alkylenrest. Geeignete Alkylenoxide sind beispielsweise Tetrahydrofuran, 1,3-Propylenoxid, 1,2- bzw. 2,3-Butylenoxid und vorzugsweise Ethylenoxid und 1,2-Propylenoxid. Weiter können als Katalysatoren auch Multimetallcyanidverbindungen, sogenannte DMC-Katalysatoren, eingesetzt werden. Die Alkylenoxide können einzeln, alternierend nacheinander oder als Mischungen verwendet werden. Bevorzugt werden Mischungen aus 1,2-Propylenoxid und Ethylenoxid, wobei das Ethylenoxid in Mengen von 10 bis 50 % als Ethylenoxid-Endblock eingesetzt wird ("EO-cap"), so dass die entstehenden Polyole zu über 70 % primäre OH-Endgruppen aufweisen.

Als Startermolekül kommen Wasser oder 2- und 3-wertige Alkohole, wie Ethylenglykol, 1,2- und 1,3-Propandiol, Diethylenglykol, Dipropylenglykol, 1,4-Butandiol, Glycerin oder Trimethylolpropan, vorzugsweise Ethylenglykol, 1,2- und 1,3-Propandiol, Diethylenglykol, Dipropylenglykol, Tripropylenglykol und 1,4-Butandiol in Betracht.

Die Polyetherpolyole, vorzugsweise Polyoxypropylen-polyoxyethylen-polyole, besitzen eine mittlere Funktionalität von 1,7 bis 4, besonders bevorzugt von 1,8 bis 3 und insbesondere von 1,9 bis 2,5 und Molekulargewichte von 1.000 bis 12.000, vorzugsweise von 1.400 bis 8.000 g/mol und besonders bevorzugt 1.700 bis 6.000 g/mol. Insbesondere werden als Polyetherpolyole solche eingesetzt, die durch DMC-Katalyse, ausgehend von einem difunktionellen Starter, hergestellt wurden.

Als Polyetherpolyole wird ebenfalls bevorzugt Polytetrahydrofuran eingesetzt. Dabei beträgt die Funktionalität üblicherweise von 1,8 bis 3, bevorzugt von 1,9 bis 2,5 und besonders bevorzugt ungefähr 2 und das zahlenmittleren Molekulargewicht üblicherweise 500 bis 4000 g/mol, bevorzugt 750 bis 3000 g/mol, besonders bevorzugt 800 bis 2500 g/mol und insbesondere von etwa 2000 g/mol.

Polyesterpolyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen, mehrwertigen Alkoholen, vorzugsweise Diolen, mit 2 bis 12 Kohlenstoffatomen, vorzugsweise 2 bis 6 Kohlenstoffatomen, hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure. Beispiele für zwei und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol und 1,6-Hexandiol. Eingesetzt werden können ferner Polyesterpolyole aus Lactonen, z.B. ε-Caprolacton oder Hydroxycarbonsäuren, z.B. ω-Hydroxycapronsäure.

Zur Herstellung der Polyesterpolyole können die organischen, z.B. aromatischen und vorzugsweise aliphatischen Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgas, wie z.B. Stickstoff, Koh-lenmonoxid, Helium, Argon u.a. in der Schmelze bei Temperaturen von 150 bis 250°C. vorzugsweise 180 bis 220°C, gegebenenfalls unter vermindertem Druck, bis zu der gewünschten Säurezahl, die vorzugsweise kleiner als 10, besonders bevorzugt kleiner als 2 ist, polykondensiert werden. Nach einer bevorzugten Ausführungsform wird als Veresterungsgemisch bei den oben genannten Temperaturen bis zu einer Säurezahl von 80 bis 30. vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol zur azeotropen Abdestillation des Kondensationswassers durchgeführt werden. Zur Herstellung der Polyesterpolyole werden die organischen Polycarbonsäuren und/oder -derivate und mehrwertigen Alkohole vorteilhafterweise im Molverhältnis von 1 :1 bis 1,8, vorzugsweise 1 :1,05 bis 1,2 polykondensiert.

Die erhaltenen Polyesterpolyole besitzen vorzugsweise eine Funktionalität von 1,8 bis 4, besonders bevorzugt von 1,9 bis 3 und insbesondere von 2,0 bis 2,5 und ein Molekulargewicht von 480 bis 5000, vorzugsweise 1000 bis 4500 g/mol und insbesondere 1600 bis 4500.

Vorzugsweise werden als höhermolekulare Verbindung b) Mischungen, enthaltend Polyetherole und Polyesterole eingesetzt.

Dabei ist es erfindungswesentlich, dass die gemittelte Funktionalität der höhermolekularen Verbindungen mit gegenüber Isocyanat reaktiven Gruppen kleiner als 2,5 ist. Vorzugsweise ist die mittlere Funktionalität der höhermolekularen Verbindungen mit gegenüber Isocyanat reaktiven Gruppen kleiner als 2,2. Dabei ist der Anteil an höhermolekularen Verbindungen mit genau zwei gegenüber Isocyanatgruppen reaktiven Gruppen, sogenannte Diole, bezogen auf das Gesamtgewicht der höhermolekularen Verbindungen mit gegenüber Isocyanatgruppen reaktiven Gruppen b) größer 50 Gew.-%, besonders bevorzugt größer 80 Gew.-% und insbesondere 100 Gew.-%.

Die Feststoffpartikel c) weisen einem mittleren Teilchendurchmesser von 0,001 bis 50µm, bevorzugt 0,01 bis 50 µm, besonders bevorzugt von 0,1 bis 10 µm auf. Dabei kann die Teilchengrößenverteilung monomodal oder bi- bzw. multimodal sein.

Als Feststoffpartikel können beispielsweise organische Feststoffe eingesetzt werden, die dispergiert vorliegen, wie Feststoffe in Polymerpolyetherolen, Polyharnstoffdispersionen, Epoxydispersionen, und Polyisocyanat-Polyadditionspolyolen. Solche Dispersionen und deren Verstellung ist beispielsweise in "Mihail lonescu, Chemistry and Technology of Polyols for Polyurethanes, Rapra Technology Ltd., 2005. ISBN: 185957-491-2), beschrieben.

Die Feststoffpartikel weisen mindestens eine gegenüber Isocyanatgruppen reaktive Gruppe auf, und liegen in zumindest einer der höhermolekularen Verbindungen b) dispergiert vor. Handelt es sich bei dem Dispersionsmittel um Polyetherol oder Polyesterol, in dem als dispergierte Phase Feststoffpafikel aus radikalisch polymerisierten Polymeren vorliegen, wird diese Dispersion auch als Polymerpolyol bezeichnet.

Im Rahmen der Erfindung ist der Einsatz von Polymerpolyolen besonders bevorzugt. Dabei kann auch auf den Zusatz von weiteren höhermolekularen Verbindungen mit gegenüber Isocyanat reaktiven Gruppen b) neben dem Dispersionsmittel verzichtet werden.

Im Allgemeinen sind Polymerpolyole bekannt und kommerziell erhältlich. Polymerpolyole werden durch radikalische Polymerisation der Monomere, vorzugsweise Acrylniltril, Styrol sowie gegebenenfalls weiterer Monomerer, eines Makromers und gegebenenfalls eines Moderators unter Einsatz eines Radikal-Initiators, meist Azo-oder Peroxidverbindungen, in einem Polyetherol beziehungsweise Polyesterol als kontinuierliche Phase hergestellt. Das Polyetherol oder das Polyesterol, das die kontinuierliche Phase und damit das Dispersionsmittel darstellt, wird häufig auch als Trägerpolyol bezeichnet. Beispielhaft für die Herstellung von Polymerpolyolen sind hier die Patentschriften US 4568705, US 5830944, EP 163188, EP 365986, EP 439755, EP 664306, EP 622384, EP 894812 und WO 00/59971 zu nennen.

Üblicherweise ist das eine in situ Polymerisation von Acrylnitril, Styrol oder vorzugsweise Mischungen aus Styrol und Acrylnitril, z.B. im Gewichtsverhältnis 90:10 bis 10:90 vorzugsweise 70:30 bis 30:70.

Als Trägerpolyole kommen alle unter b) beschriebenen Polyole in Frage. Makromere, auch als Stabilisatoren bezeichnet, sind lineare oder verzweigte Polyetherole mit Molekulargewichten ≥ 1000 g/mol, die mindestens eine endständige, reaktionsfähige ethylenische ungesättigte Gruppe enthalten. Die ethylenisch ungesättigte Gruppe kann über Reaktion mit Carbonsäuren wie Acrylsäure, Carbonsäurehalogeniden wie Acrylsäurechlorid, Carbonsäure-Anhydriden, wie Maleinsäureanhydrid, Fumarsäure, Acrylat- und Methacrylat-derivaten, ethylenisch ungesättigten Epoxiden wie 1-Vinylcyclohexen-3,4-expoxid, 1-Butadienmonoxid, Vinylglycidylether, Glycidylmethacrylat und Allylglycidylether sowie Isocyanat-Derivaten, wie 3-Isopropenyl-1,1-dimethyl-benzyl-Isocyanat, Isocyanato-ethylmethacrylat, an ein bereits bestehendes Polyol angefügt werden. Ein weiterer Weg ist die Herstellung eines Polyols durch Alkoxydation von Propylenoxid und Ethylenoxid unter Verwendung von Startmolekülen mit Hydroxylgruppen und einer ethylenischen Ungesättigtheit. Beispiele für solche Makromere sind in den Dokumenten US 4390645, US 5364906, EP 0461800, US 4997857, US 5358984, US 5990232, WO 01/04178 und US 6013731 beschrieben.

Während der radikalischen Polymerisation werden die Makromere mit in die Polymerkette eingebaut. Dadurch bilden sich Copolymere mit Polyether- und einem PolyAcrylnitril-Styrol-Blöcken, welche in der Grenzfläche von kontinuierlicher Phase und dispergierter Phase als Phasenvermittler wirken und das Agglomerieren der Polymer-polyolpartikel unterdrücken. Der Anteil der Makromere kann bis zu größer 90 Gew.-% betragen und beträgt üblicherweise 1 bis 60 Gew.-% , bevorzugt 1 bis 40 Gew.-% und besonders bevorzugt 1 bis 15 Gew.-%, jeweils bezogen auf das Gesamtgewicht der zur Herstellung des Polymerpolyols eingesetzten Monomere.

Zur Herstellung von Polymerpolyolen werden üblicherweise Moderatoren, auch als Kettenüberträger bezeichnet, eingesetzt. Die Moderatoren verringern durch Kettenübertragung des wachsenden Radikals das Molekulargewicht der sich bildenden Copolymere, wodurch die Vernetzung zwischen den Polymermolekülen verringert wird, was die Viskosität und die Dispersionsstabilität sowie die Filtrierbarkeit der Polymer-polyole beeinflusst. Der Anteil der Moderatoren beträgt üblicherweise 0,5 bis 25 Gew.-%, bezogen auf das Gesamtgewicht der zur Herstellung des Polymerpolyols eingesetzten Monomere. Moderatoren, die üblicherweise zur Herstellung von Polymer-polyolen eingesetzt werden, sind Alkohole, wie 1-Butanol, 2-Butanol, Isopropanol, Ethanol, Methanol, Cyclohexan, Toluene, Mercaptane, wie Ethanthiol, 1-Heptanthiol, 2-Octanethiol, 1-Dodecanthiol, Thiophenol, 2-Ethylhexylthioglycolate, Methylthioglycolate, Cyclohexylmercaptan sowie Enoletherverbindungen, Morpholine und a-(Benzoyloxy)styren. Bevorzugt wird Alkylmercaptan verwendet.

Zur Initiierung der radikalischen Polymerisation werden üblicherweise Peroxid- oder Azo-Verbindungen, wie Dibenzoyl-peroxide, Lauroylperoxide, t-Amylperoxy-2-ethyl-hexanoate, Di-t-butylperoxide, Diisopropyl peroxide carbonate, t-Butyl peroxy-2-ethyl-hexanoate, t-Butylperpivalate, t-Butylperneo-decanoate, t-Butylperbenzoate, t-Butyl percrotonate, t-Butyl perisobutyrate, t-Butylperoxy-1-methylpropanoate, t-Butylperoxy-2-ethylpentanoate, t-Butylperoxyoctanoate und Di-t-butylperphthalate, 2,2'-Azobis(2,4-dimethyl-valeronitrile), 2,2'-Azobisisobutyronitrile (AIBN), Dimethyl-2,2'-azobisiso-butyrate, 2,2'-Azobis(2-methylbutyronitrile) (AMBN), 1,1'-Azobis(1-cyclohexane-carbonitrile), eingesetzt. Der Anteil der Initiatoren beträgt üblicherweise 0,1 bis 6 Gew.-%, bezogen auf das Gesamtgewicht der zur Herstellung des Polymerpolyols eingesetzten Monomere.

Die radikalische Polymerisation zur Herstellung von Polymerpolyolen wird aufgrund der Reaktionsgeschwindigkeit der Monomere sowie der Halbwertszeit der Initiatoren üblicherweise bei Temperaturen von 70 bis 150°C und einem Druck bis zu 20 bar durchgeführt. Bevorzugte Reaktionsbedingungen zur Herstellung von Polymerpolyolen sind Temperaturen von 80 bis 140°C bei einem Druck von Atmosphärendruck bis 15 bar.

Polymerpolyole werden in kontinuierlichen Verfahren, unter Einsatz von Rührkesseln mit kontinuierlichem Zu- und Ablauf, Rührkesselkaskaden, Rohrreaktoren und Loopreaktoren mit kontinuierlichem Zu- und Ablauf, oder in diskontinuierlichen Verfahren, mittels eines Batch Reaktors oder eines Semi-Batch Reaktors, hergestellt.

Die Reaktion zur Herstellung der Polymerpolyole kann auch in Gegenwart eines inerten Lösungsmittels durchgeführt werden. Als Lösungsmittel können beispielsweise eingesetzt werden: Benzol, Toluol, Xylol, Acetonitril, Hexan, Heptan, Dioxan, Ethylacetat, N,N-Dimethylformamid, N,N-Dimethylacetamid, etc. Bevorzugt sind Benzol, Xylol und Toluol.

Vorzugsweise wird zur Herstellung des Polymerpolyols ein difunktionelles Polyetherpolyol mit überwiegend primären OH-Gruppen und einem zahlenmittleren Molekulargewicht von 1000 bis 12000 g/mol, bevorzugt 1400 bis 8000 g/mol, besonders bevorzugt 1700 bis 6000 g/mol, als Trägerpolyol verwendet

In einer besonders bevorzugten Ausführungsform wird zur Herstellung des Polymerpolyols Polytetrahydrofuran (PTHF), üblicherweise mit einem zahlenmittleren Molekular-gewicht von 500 bis 4000 g/mol, bevorzugt 750 bis 3000 g/mol, bevorzugt 800 bis 2500 g/mol, insbesondere von etwa 2000 g/mol als Trägerpolyol eingesetzt.

Geeignete ethylenisch ungesättigte Monomere für die Herstellung des Feststoffanteils des Polymerpolyols sind beispielsweise Butadien, Isopren, 1,4-Pentadien, 1,6-Hexadien, 1,7-Octadien, Styrol, Alpha-Methylstyrol, 2-Methylstyrol, 3-Methylstyrol, 4-Methylstyrol, 2,4-Dimethylstyrol, Ethylstyrol, Isopropylstyrol, Butylstyrol, Phenylstyrol, Cyclohexylstyrol, Benzylstyrol und ähnlichen Derivate; substituierte Styrole wie Cyanostyrol, Nitrostyrol, N,N-Dimethylaminostyrol, Acetoxystyrol, Methyl-4-Vinylbenzoat, Phenoxystyrol, p-Vinylphenyoxid und ähnliche Derivate; Acrylate und substituierte Acrylate wie Acrylnitril, Acrylsäure, Methacrylsäure, Methacrylacrylat, 2-Hydroxyethylacrylat, Methylmethacylat, Cyclohexylmethacrylat, Benyzylmethacrylat, Isopropyl-methacrylat, Octylmethacrylat, Methacrylnitril, Ethyl-alpha-ethoxyacrylat, Methyl-alphaacetaminoacrylate, Butylacrylat, 2-Ethylhexylacrylat, Phenylacrylat, Phenylmethacrylat, Acrylamid, N,N-Dimethylacrylamid, N,N-Dibenzylacrylamid, N-Butylacrylamid, Methacryloylformamid und ähnliche Derivate; Vinylester, Vinylether, Vinylketone, etc. wie Vinylacetat, Vinylbutyrat, Isopropenylacetat, Vinylformiat, Vinylacrylate, Vinylmethacrylat, Vinylmethoxyacetat, Vinylbenzoat, Vinyltoluol, Vinylnaphtalin, Vinylmethylether, Vinylpropylether, Vinylbutylether, Vinyl-2-ethylhexylether, Vinylphenylether, Vinyl-2-methoxyethylether, Methoxybutadien, Vinyl-2-butoxyethylether, 2,4-Dihydro-1,2-Pyran, 2-Butoxy-2'-Vinyloxydiethylether, Vinylmethylketon, Vinylethylketon, Vinylphenyketon, Vinylethylsulfon, N-methyl-N-vinylacetamid, N-vinylpyrrolidon, vinylimidazol, Dinvinylsulfoxid, Divinylsulfon, Natrium-vinylsulfonat, Methylvinylsulfonat, N-Vinylpyrrol, Vinylphosphonat, und ähnliche Derivate; Dimethylfumarat, Dimethylmaleat, Maleinsäure, Crotonsäure, Fumarsäure, Itaconsäure, Monomethylitaconat, t-Butylaminoethylmethacrylat, Dimethylaminoethyl-methacrylat, Glycidylacrylat, Allylalkohol, Glycolmonoester von Itaconsäure, Vinylpyridin und ähnlichen Derivaten. Bevorzugte ethylenisch ungesättigte Monomere sind Styrol, Acrylnitril, Acrylate und Acrylamide.

In einer bevorzugten Ausführungsform werden als ethylenisch ungesättigte Monomere Acrylnitril, Styrol, insbesondere Styrol und Acrylnitril im Verhältnis zwischen 1:3 bis 3:1 verwendet. Bevorzugt wird weiterhin zur Polymerisation ein Makromer zugegeben. Gegebenenfalls wird die Polymerisation ferner unter Einsatz eines Moderators und unter Einsatz eines Radikal-Initiators durchgeführt.

In einer bevorzugten Ausführungsform enthält der Feststoffanteil Acrylnitril, Styrol und Makromer, wobei der Anteil an Acrylnitril 10 bis 75 Gew.-% und bevorzugt 25 bis 35 Gew.-%, der Anteil an Styrol 30 bis 90 Gew.-%, bevorzugt 55 bis 70 Gew.-% und der Anteil an Makromer 1 bis 10 Gew.-%, bevorzugt 3 bis 6 Gew.-%, bezogen auf das Gesamtgewicht des Feststoffanteils des Polymerpolyols, beträgt.

In einer bevorzugten Ausführungsform weist das Polymerpolyol einen Feststoffanteil von 25 bis 90 Gew.-%, besonders bevorzugt 30 bis 60 und insbesondere 35 bis 55 Gew.-%, bezogen auf das Gesamtgewicht des Polymerpolyols, auf.

Der Feststoffgehalt von Polymerpolyolen errechnet sich aus dem prozentualen Verhältnis der eingesetzten Monomeren und des Makromeren, zu den eingesetzten Trägerpolyolen und wird am fertigen Polymerpolyol üblicherweise gravimetrisch aus dem prozentualen Verhältnis der Feststoffmasse zu Gesamtmasse des Polymerpolyols bestimmt.

Der Feststoffgehalt, bezogen auf das Gesamtgewicht der Komponenten a) bis f) beträgt mindestens 15 Gew.-%. Vorzugsweise beträgt der Feststoffgehalt 20 bis 80, besonders bevorzugt 25 bis 60 Gew.-%, jeweils bezogen auf das Gesamtgewicht der Komponenten a) bis f). Dabei können auch Mischungen aus unterschiedlichen Feststoffpartikeln c) eingesetzt werden.

Ferner sind bei der Herstellung von Polyurethanschaumstoffen Treibmittel d) zugegen. Diese Treibmittel enthalten gegebenenfalls Wasser. Als Treibmittel d) können neben Wasser noch zusätzlich allgemein bekannte chemisch und/oder physikalisch wirkende Verbindungen eingesetzt werden. Unter chemischen Treibmitteln versteht man Verbindungen, die durch Reaktion mit Isocyanat gasförmige Produkte bilden, wie beispielsweise Wasser oder Ameisensäure. Unter physikalischen Treibmitteln versteht man Verbindungen, die in den Einsatzstoffen der Polyurethan-Herstellung gelöst oder emulgiert sind und unter den Bedingungen der Polyurethanbildung verdampfen. Dabei handelt es sich beispielsweise um Kohlenwasserstoffe, halogenierte Kohlenwasserstoffe, und andere Verbindungen, wie zum Beispiel perfluorierte Alkane, wie Perfluorhexan, Fluorchlorkohlenwasserstoffe, und Ether, Ester, Ketone und/oder Acetale, beispielsweise (cyclo)aliphatische Kohlenwasserstoffe mit 4 bis 8 Kohlenstoffatomen, oder Fluorkohlenwasserstoffe, wie Solkane® 365 mfc der Firma Solvay Fluorides LLC. In einer bevorzugten Ausführungsform wird als Treibmittel eine Mischung enthaltend mindestens eines dieser Treibmittel und Wasser eingesetzt, insbesondere Wasser als alleiniges Treibmittel. Wird kein Wasser als Treibmittel eingesetzt, werden vorzugsweise ausschließlich physikalische Treibmittel verwendet.

Der Gehalt an Wasser beträgt in einer bevorzugten Ausführungsform von 0,025 bis 3 Gew.-%, bevorzugt 0,05 bis 2 Gew.-%, besonders bevorzugt 0,1 bis 1,5 Gew.-%, insbesondere 0,15 bis 1 Gew.-%, bezogen auf das Gesamtgewicht der Komponenten a) bis g).

In einer weiteren bevorzugten Ausführungsform werden der Reaktionsmischung als zusätzliches Treibmittel Mikrohohlkugeln, die physikalisches Treibmittel enthalten, zugegeben. Die Mikrohohlkugeln können auch im Gemisch mit den vorstehend genannten zusätzlichen chemischen Treibmitteln und/oder physikalischen Treibmitteln eingesetzt werden.

Die Mikrohohlkugeln bestehen üblicherweise aus einer Hülle aus thermoplastischem Polymer und sind im Kern mit einer flüssigen, niedrig siedenden Substanz auf Basis von Alkanen gefüllt. Die Herstellung solcher Mikrohohlkugeln ist beispielsweise in US 3 615 972 beschrieben. Die Mikrohohlkugeln weisen im allgemeinen einen Durchmesser von 5 bis 50 µm auf. Beispiele für geeignete Mikrohohlkugeln sind unter dem Handelsnamen Expancell® der Firma Akzo Nobel erhältlich.

Die Mikrohohlkugeln werden im allgemeinen in einer Menge von 0,5 bis 5 Gew.-%, bezogen auf das Gesamtgewicht der Komponenten b), c) und d) zugesetzt.

Als Kettenverlängerungsmittel und/oder Vernetzungsmittel e) werden Substanzen mit einem Molekulargewicht von kleiner 400 g/mol, besonders bevorzugt von 60 bis 350 g/mol eingesetzt, wobei Kettenverlängerungsmittel 2 gegenüber Isocyanaten reaktive Gruppen und Vernetzungsmittel 3 gegenüber Isocyanat reaktive Gruppen aufweisen. Diese können einzeln oder bevorzugt in Form von Mischungen eingesetzt werden. Vorzugsweise werden Diole und/oder Triole mit Molekulargewichten kleiner als 400, besonders bevorzugt von 60 bis 300 und insbesondere 60 bis 150 eingesetzt. In Betracht kommen beispielsweise aliphatische, cycloaliphatische und/oder aromatische Diole mit 2 bis 14, vorzugsweise 2 bis 10 Kohlenstoffatomen, wie Ethylenglykol, 1,3-Propandiol, 1,10-Decandiol, 1,2-, 1,3-, 1,4-Dihydroxycyclohexan, Diethylenglykol, Dipropylenglykol und vorzugsweise 1,4-Butandiol, 1,6-Hexandiol und Bis-(2-hydroxyethyl)-hydrochinon, Triole, wie 1,2,4-, 1,3,5-Trihydroxy-cyclohexan, Glycerin und Trimethylolpropan, und niedermolekulare hydroxylgruppenhaltige Polyalkylenoxide auf Basis Ethylen- und/oder 1,2-Propylenoxid und den vorgenannten Diolen und/oder Triolen als Startermoleküle. Besonders bevorzugt werden als Kettenverlängerungsmittel und / oder Vernetzungsmittel (e) Monoethylenglycol, 1,4-Butandiol und/oder Glycerin und dessen ethoxylierte Derivate eingesetzt.

Sofern Kettenverlängerungsmittel Anwendung finden, ist es erfindungswesentlich, dass diese in Mengen weniger als 4 Gew.-% an Kettenverlängerungsmittel und Vernetzungsmittel e), bezogen auf das Gesamtgewicht der Komponenten a) bis f), eingesetzt.

Als Katalysatoren f) zur Herstellung der Polyurethanschaumstoffe werden bevorzugt Verbindungen verwendet, welche die Reaktion der Hydroxylgruppen enthaltenden Verbindungen der Komponente b) und gegebenenfalls d) mit den Polyisocyanaten a) stark beschleunigen. Genannt seien beispielsweise Amidine, wie 2,3-Dimethyl-3,4,5,6-tetra-hydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethyl-butandiamin, N,N,N',N'-Tetramethyl-hexandiamin, Pentamethyl-diethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)-octan und Alkanolaminverbindungen, wie Triethanolamin, Triisopropanolamin, N-Methyl- und N-Ethyl-diethanolamin und Dimethylethanolamin. Ebenso kommen in Betracht organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutyl-zinndiacetat, Dibutylzinndilaurat, Dibutylzinn-maleat und Dioctylzinn-diacetat, sowie Bismutcarboxylate, wie Bismut(III)-neodecanoat, Bismut-2-ethylhexanoat und Bismut-octanoat oder Mischungen davon. Weiter können auch Titan- und Zinkbasierte Katalysatoren, wie Titan(IV) bis(ethylacetoacetato)diisopropoxid, Titan(IV)-diisopropoxid-bis(2,4-pentan-dionat), Titan(IV)triisopropoxid(2,4-pentandionat), Ethoxybis(pentan-2,4-dionato-0,0')(propan-2-olato)titan, Titan(IV)-oxid-acetylacetonat, Bis(diacetylacetonato)titanium(IV)-butoxid-isopropoxid, Bis(diacetylacetonato)titanium(IV)-ethoxid-isopropoxid) und gesättigte oder ungesättigte, aliphatische oder alicyclische sowie aromatische Carboxylate des Zink, wie (II)-naphthenat, Zink(II)-decanoat, Zink(II)-butyrat, wie Zink(II)-4-cyclohexyl-butyrat, Zink(II)-neodecanoat, Zink(II)-isobutyrat, Zink(II)-benzoat, sowie Zink(II)-bis-2,2,6,6-tetramethyl-3,5-heptandionat und Zink(II)-p-toluolsulfonat. Besonders bevorzugt sind Zink(II)-octoat und Zink(II)-2-ethylhexanoat eingesetzt werden. Dabei werden Titan- und Zinkbasierte Katalysatoren vorzugsweise in Kombination miteinander eingesetzt. Solche Kombinationen sind beispielsweise in EP 1736489 beschrieben. Die organischen Metallverbindungen können allein oder vorzugsweise in Kombination mit stark basischen Aminen eingesetzt werden. Handelt es sich bei der Komponente b) um einen Ester, werden vorzugsweise ausschließlich Aminkatalysatoren eingesetzt.

Vorzugsweise verwendet werden 0,001 bis 5 Gew.-%, insbesondere 0,05 bis 2 Gew.-% Katalysator bzw. Katalysatorkombination, bezogen auf das Gewicht der Komponente b).

Der Reaktionsmischung zur Herstellung der Polyurethanschäume können gegebenenfalls auch noch Hilfsmittel und/oder Zusatzstoffe (g) zugegeben werden. Genannt seien beispielsweise oberflächenaktive Substanzen, Schaumstabilisatoren, Zellregler, Trennmittel, Füllstoffe, Farbstoffe, Pigmente, Hydrolyseschutzmittel, geruchsabsorbierende Substanzen, Duftstoffe und fungistatische und/oder bakteriostatisch wirkende Substanzen.

Als oberflächenaktive Substanzen kommen z. B. Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie die Natriumsalze von Ricinusölsulfaten oder von Fettsäuren, sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure, und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnussöl, und Zellregler, wie Paraffine, Fettalkohole und Dimethylpolysiloxane. Zur Verbesserung der Emulgierwirkung, der Zellstruktur und/oder Stabilisierung des Schaumes eignen sich ferner oligomere Acrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 100 Gew.-Teile der Komponente (b), eingesetzt.

Als geeignete Trennmittel seien beispielhaft genannt: Umsetzungsprodukte von Fettsäureestern mit Polyisocyanaten, Salze aus Aminogruppen enthaltenden Polysiloxanen und Fettsäuren, Salze aus gesättigten oder ungesättigten (cyclo)aliphatischen Carbonsäuren mit mindestens 8 C-Atomen und tertiären Aminen sowie insbesondere innere Trennmittel, wie Carbonsäureester und/oder -amide, hergestellt durch Veresterung oder Amidierung einer Mischung aus Montansäure und mindestens einer aliphatischen Carbonsäure mit mindestens 10 C-Atomen mit mindestens difunktionellen Alkanolaminen, Polyolen und/oder Polyaminen mit Molekulargewichten von 60 bis 400 g/mol, wie beispielsweise in EP 153 639 offenbart, Gemischen aus organischen Aminen, Metallsalzen der Stearinsäure und organischen Mono- und/oder Dicarbonsäuren oder deren Anhydride, wie beispielsweise in DE-A-3 607 447 offenbart, oder Gemischen aus einer Iminoverbindung, dem Metallsalz einer Carbonsäure und gegebenenfalls einer Carbonsäure, wie beispielsweise in US 4 764 537 offenbart.

Als Füllstoffe, zusätzlich zu den unter c) beschriebenen Feststoffpartikel, können insbesondere verstärkend wirkende Füllstoffe mit einer Teilchengröße von größer 50 µm zugegeben werden. Dabei handelt es sich um die an sich bekannten, üblichen organischen und anorganischen Füllstoffe, Verstärkungsmittel, Beschwerungsmittel, Beschichtungsmittel usw. Im einzelnen seien beispielhaft genannt: anorganische Füllstoffe, wie silikatische Mineralien, beispielsweise Schichtsilikate, wie Antigorit, Bentonit, Serpentin, Hornblenden, Amphibole, Chrisotil, Calciumcarbonate und Talkum, Metalloxide, wie Kaolin, Aluminiumoxide, Titanoxide, Zinkoxid und Eisenoxide, Metallsalze wie Kreide und Schwerspat, und anorganische Pigmente, wie Cadmiumsulfid, Zinksulfid sowie Glas u.a. Vorzugsweise verwendet werden Kaolin (China Clay), Aluminiumsilikat und Copräzipitate aus Bariumsulfat und Aluminiumsilikat sowie natürliche und synthetische faserförmige Mineralien, wie Wollastonit, Metall- und insbesondere Glasfasern verschiedener Länge, die gegebenenfalls geschlichtet sein können. Als organische Füllstoffe kommen beispielsweise in Betracht: Russ, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstofffasern.

Die anorganischen und organischen Füllstoffe können einzeln oder als Gemische verwendet werden und werden der Reaktionsmischung vorteilhafterweise in Mengen von 0,5 bis 50 Gew.-%, vorzugsweise 1 bis 40 Gew.-%, bezogen auf das Gewicht der Komponenten (a) bis (c), zugegeben, wobei jedoch der Gehalt an Matten, Vliesen und Geweben aus natürlichen und synthetischen Fasern Werte bis 80 Gew.-% erreichen kann.

Die Herstellung des erfindungsgemäßen Polyurethans erfolgt dabei durch vermischen von a) Polyisocyanaten, b) höhermolekulare Verbindungen mit gegenüber Isocyanatgruppen reaktiven Gruppen, c) Feststoffpartikel, d) gegebenenfalls Kettenverlängerungsmittel und / oder Vernetzungsmittel, e) gegebenenfalls Treibmittel, f) gegebenenfalls Katalysator und g) gegebenenfalls sonstige Zusatzstoffe, zu einer Reaktionsmischung und ausreagieren lassen der Reaktionsmischung, wobei der Anteil an Kettenverlängerungsmittel kleiner als 6 Gew.-%, bezogen auf das Gesamtgewicht der Komponenten a) bis f) ist, der Gehalt an Feststoffpartikeln größer 15 Gew.-%, bezogen auf das Gesamtgewicht der Komponenten a) bis f) ist und die mittlere Funktionalität der höhermolekularen Verbindungen mit gegenüber Isocyanatgruppen reaktiven Gruppen kleiner als 2,5 ist. Als Komponenten a) bis f) werden dabei vorzugsweise die oben beschriebenen Komponenten a) bis f) eingesetzt. Diese werden zur Herstellung des erfindungsgemäßen geschäumten Polyurethans in solchen Mengen miteinander vermischt, dass das Äquivalenzverhältnis von NCO-Gruppen der Polyisocyanate a) zur Summe der reaktiven Wasserstoffatome der Komponenten b), c), d) und e) 1 : 0,8 bis 1 : 1,25, vorzugsweise 1 : 0,9 bis 1 : 1,15 beträgt. Im Rahmen der Erfindung wird die Mischung der Komponenten a) bis g) bei Reaktionsumsätzen kleiner 90 %, bezogen auf die Isocyanatgruppen, als Reaktionsmischung bezeichnet.

Die erfindungsgemäßen geschäumten Polyurethane werden vorzugsweise nach dem one-shot-Verfahren mit Hilfe der Niederdruck- oder Hochdrucktechnik erhalten. Zur Herstellung von erfindungsgemäßen Integralschaumstoffen werden die Ausgangskomponenten a) bis g) vorzugsweise bei einer Temperatur von 15 bis 90 °C, besonders bevorzugt von 25 bis 55 °C gemischt und die Reaktionsmischung gegebenenfalls unter erhöhtem Druck in das geschlossene Formwerkzeug eingebracht. Die Vermischung kann mechanisch mittels eines Rührers oder einer Rührschnecke oder unter hohem Druck im so genannten Gegenstrominjektionsverfahren durchgeführt werden. Die Formwerkzeugtemperatur beträgt zweckmäßigerweise 20 bis 160 °C, vorzugsweise 30 bis 120 °C, besonders bevorzugt 30 bis 60 °C.

Die Menge der in das Formwerkzeug eingebrachten Reaktionsmischung wird so bemessen, dass die erhaltenen Formkörper aus Integralschaumstoffen eine Dichte gemäß DIN EN ISO 845 von 150 bis 1100 g/L, bevorzugt 200 bis 1000 g/L und insbesondere 500 bis 950 g/L aufweisen. Die Verdichtungsgrade zur Herstellung der Formkörper mit verdichteter Randzone und zelligem Kern liegen im Bereich von 1,1 bis 8,5, vorzugsweise von 2,1 bis 7,0.

Erfindungsgemäße geschäumte Polyurethane zeichnen sich durch eine angenehme Haptik, eine sehr gute Rutschfestigkeit im Trockenen und bei Nässe und durch herausragende Dauerbiegeeigenschaften aus. Daher eignen sich erfindungsgemäße geschäumte Polyurethane als Schuhsohlen, zum Beispiel für Straßenschuhe, Sportschuhe, Sandalen und Stiefel aber auch im Bereich von Automobilinnenausstattung, wie Lenkrädern Kopfstützen oder Schaltknöpfen oder Motorradsitzen sowie als Federelement.

Im Folgenden wird die Erfindung im Rahmen von Beispielen verdeutlicht:
Ausgangsmaterialien
   - Polyol 1:: Propylenglcyol-gestartetes Polyetherpolyol mit OH Zahl von 29 und überwiegend primären OH-Gruppen (Zusammensetzung 80% Propylenoxid, 20 % Ethylenoxid)
   - Polyol 2:: Glycerin-gestartetes Polyetherpolyol mit OH Zahl von 27 und überwiegend primären OH-Gruppen (Zusammensetzung 80% Propylenoxid, 20 % Ethylenoxid)
   - Polyol 3:: Glycerin-gestartetes Polyetherpolyol mit OH Zahl von 35 und überwiegend primären OH-Gruppen (Zusammensetzung 85% Propylenoxid, 15 % Ethylenoxid)
   - Polyol 4:: Polymerpolyetherol (Styrol/Acrylnitril-Partikel) auf Basis von Polyol 3 mit OH Zahl von 20 und einem gewichtsmäßigem Feststoffgehalt von 45%.
   - Polyol 5:: Dipropylenglcyol-gestartetes Polyetherpolyol mit OH Zahl von 63 und überwiegend primären OH-Gruppen (Zusammensetzung 70% Propylenoxid, 30 % Ethylenoxid)
   - Polyol 6:: Polymerpolyetherol (Styrol/Acrylnitril-Partikel) auf Basis von Polyol 5 mit OH Zahl von 36 und einem gewichtsmäßigem Feststoffgehalt von 37%.
   - Polyol 7:: Polymerpolyetherol (Styrol/Acrylnitril-Partikel) auf Basis von Polyol 5 mit OH Zahl von 36 und einem gewichtsmäßigem Feststoffgehalt von 37%, wobei das Polyolmakromer verestert ist.
   - Polyol 8:: Ungesättigtes Polyetherpolyol aus Sorbitol, Propylenoxid, Ethylenoxid und Meta-Isopropenylbenzylisocyanat, mit OH-Zahl: 20,
   - Polyol 9:: Ungesättigtes Polyetherpolyol aus Sorbitol, Propylenoxid, Ethylenoxid und Meta Isopropenylbenzylisocyanat mit OH-Zahl kleiner 1, das aus Polyol 8 durch Veresterung mit Essigsäure hergestellt wurde.
   - Katalysator 1:: Triethylendiamin
   - Katalysator 2:: Bis-(2-dimethylaminoethyl)ether (Niax A1)
   - Katalysator 3:: Formrez UL28
   - Katalysator 4:: Bis-(dimethylaminopropyl)methylamine (Polycat 77)
   - Kettenverlängerungsmittel 1:: Monoethylenglycol
   - Kettenverlängerungsmittel 2:: 1,4-Butandiol
   - Vernetzungsmittel:: ethoxyliertes Glycerin
   - Vernetzungsmittel 2:: Glycerin
   - Abriebschutzmittel:: Luwax AF 31
   - Schaumstabilisator:: DC 193® der Firma Dow Corning, silikonbasiert)
   - Treibmittel:: Wasser
   - Isocyanat 1:: Prepolymer (50 Gew.-Teile 4,4' Diisocyanatodiphenylmethan (Rein-MDI), 2 Gew.-Teile uretoniminmodifiziertes Rein-MDI, 46 Gew.-Teilen eines linearen propylenglycol-gestarteten Polyoxypropylenetherols (OHZ 55 mg KOH/mg), 2 Gew.-Teilen Tripropylenglycol
   - Isocyanat 2:: Prepolymer (40 Gew.-Teile 4,4' Diisocyanatodiphenylmethan (Rein-MDI), 6 Gew.-Teile uretoniminmodifiziertes Rein-MDI, 54 Gew.-Teilen eines linearen propylenglycol-gestarteten Polyoxypropylenetherols (OHZ 29 mg KOH/mg)

### Allgemeine Synthesevorschrift für Polymerpolyetherole:

Die Herstellung der Polymerpolyetherole mit monomodaler oder bimodaler Teilchengrößenverteilung erfolgte in einem 4Liter Glaskolben, mit einstufigem Rührwerk, aufgesetztem Rückflusskühler und elektrischem Heizmantel. Vor Beginn der Reaktion wird der Reaktor mit einem Gemisch aus Carrierpolyol, im Fall von bimodalen Polymerpolyetherolen zusätzlich Saat und einem Teil des Makromers gefüllt, mit Stickstoff gespült und auf die Synthesetemperatur von 125°C erwärmt. Die verbleibende Menge Makromer wird während der Synthese hinzudosiert. Der restliche Teil der Reaktionsmischung bestehend aus weiterem Carrierpolyol, Initiator, den Monomeren, wurde in zwei Dosierbehältern vorgelegt. Die Synthese der Polymerpolyole erfolgte durch Überführen der Rohstoffe mit konstanter Dosiergeschwindigkeit über einen statischen In-line-Mischer in den Reaktor. Die Dosierdauer für das Monomer-Moderator-Gemisch betrug 150 Minuten, während das Polyol-Initiator-Gemisch über 165 Minuten in den Reaktor dosiert wurde. Nach weiteren 10 Minuten Nachreaktionszeit bei 125°C wird das Produkt bei einer Temperatur von 135°C unter Vakuum (< 0,1 mbar) von den nicht umgesetzten Monomeren und anderen flüchtigen Verbindungen befreit. Das Endprodukt wird mit Antioxidantien stabilisiert. Die Synthese von Mustermengen, die größer als 5kg sind, erfolgte im Druckreaktor mit zweistufigem Rührwerk und Kühlschlangen. Zum Entmonomerisieren kann das Produkt in einen anderen Behälter überführt werden.

### Beispiele:

Gemäß der folgenden Aufstellung und angegebenen Zusammensetzung wurden die Polymerpolyetherole Polyol 4, Polyol 6 und Polyol hergestellt:
- Polyol 4: Polymerpolyetherol in Polyol 3 Saat: Polymerpolyetherol in Polyol 3 (8 Gew.% bez. auf die Gesamtmenge) Feststoff: Poly-(Acrylnitril-co-Styrol) Feststoffgehalt: 45 Gew.% bez. auf die Gesamtmasse der Dispersion OH-Zahl: 20 mgKOH/g Viskosität: 4800 mPas bei 25°C Carrierpolyol: Polyol 3 Radikalstarter: Azo-Inititator (1 Gew.% bez. auf die Monomermenge) Moderator: n-Dodecanthiol (1 Gew.% bez. auf die Monomermenge) Makromer: Polyol 8 (7 Gew.% bez. auf die Monomermenge)
- Polyol 6: Polymerpolyetherol in Polyol 5 Feststoff: Poly-(Acrylnitril-co-Styrol) Feststoffgehalt: 37 Gew.% bez. auf die Gesamtmasse der Dispersion OH-Zahl: 36 mgKOH/g Viskosität: 1900 mPas bei 25°C Carrierpolyol: Polyol 5 Radikalstarter: Azo-Inititator (1 Gew.% bez. auf die Monomermenge) Moderator: n-Dodecanthiol (1 Gew.% bez. auf die Monomermenge) Makromer: Polyol 8 (6 Gew.% bez. auf die Monomermenge)
- Polyol 7: Polymerpolyetherol in Polyol 5 Feststoff: Poly-(Acrylnitril-co-Styrol) Feststoffgehalt: 37 Gew.% bez. auf die Gesamtmasse der Dispersion OH-Zahl: 36 mgKOH/g Viskosität: 1900 mPas bei 25°C Carrierpolyol: Polyol 5
- Radikalstarter:: Azo-Inititator (1 Gew.% bez. auf die Monomermenge)
- Moderator:: n-Dodecanthiol (1 Gew.% bez. auf die Monomermenge)
- Makromer:: Polyol 9 (6 Gew.% bez. auf die Monomermenge)

Gemäß der in Tabelle 1 angegebenen Zusammensetzung wurden die Polyolkomponenten A1 bis A5 hergestellt:

**Tabelle 1**

| | A1/Vergleich (Gew.-Teile) | A2 (Gew.-Teile) | A3/Vergleich (Gew.-Teile) | A4 (Gew.-Teile) | A5 (Gew.-Teile) |
|---|---|---|---|---|---|
| Polyol 1 | 30,00 | | 71,65 | | |
| Polyol 2 | 46,41 | | | | |
| Polyol 3 | | | 14,70 | | |
| Polyol 4 | 10,00 | | | | |
| Polyol 6 | | 47,66 | | 47,40 | 94,75 |
| Polyol 7 | | 47,66 | | 47,40 | |
| Katalysator 1 | 0,92 | 0,40 | 0,96 | 0,74 | |
| Katalysator 2 | | 0,16 | | 0,16 | 0,16 |
| Katalysator 3 | 0,04 | 0,10 | 0,05 | 0,10 | 0,10 |
| Katalysator 4 | 0,33 | | 0,40 | | |
| Kettenverlängerungsmittel 1 | 2,5 | 2,45 | | 2,51 | 2,80 |
| Kettenverlängerungsmittel 2 | 8,0 | | 9,74 | | |
| Vernetzter 1 | | | | | 0,50 |
| Vernetzter 2 | | | 0,50 | | |
| Abriebschutzmittel | 1,00 | 0,93 | 1,00 | 1,00 | 1,00 |
| Schaumstabilisator | 0,30 | 0,34 | 0,60 | 0,36 | 0,36 |
| Treibmittel | 0,47 | 0,23 | 0,40 | 0,25 | 0,32 |

### Versuche:

### Reaktionsmischung 1:

100 Gew.-Teile der Polyolkomponente A1 (45 °C) und 93 Gew.-Teile von Isocyanat 1 (40 °C) wurden mit einer Niederdruckschuhmaschine (EMB) vermischt und diese Mischung in eine auf 35 °C temperierte Aluminiumform (200 x 200 x 10 mm) gegeben, die Form geschlossen und der so hergestellte Polyurethanintegralschaum nach 4 Minuten entformt.

### Reaktionsmischung 2:

100 Gew.-Teile der Polyolkomponente A2 (45 °C) und 48 Gew.-Teile von Isocyanat 1 (40 °C) wurden mit einer Niederdruckschuhmaschine (EMB) vermischt und diese Mischung in eine auf 30 °C temperierte Aluminiumform (200 x 200 x 10 mm) gegeben, die Form geschlossen und der so hergestellte Polyurethanintegralschaum nach 4 Minuten entformt.

### Reaktionsmischung 3:

100 Gew.-Teile der Polyolkomponente A3 (45 °C) und 107 Gew.-Teile von Isocyanat 2 (40 °C) wurden mit einer Niederdruckschuhmaschine (Gusbi) vermischt und diese Mischung in eine auf 35 °C temperierte Aluminiumform (200 x 200 x 10 mm) gegeben, die Form geschlossen und der so hergestellte Polyurethanintegralschaum nach 4 Minuten entformt.

### Reaktionsmischung 4:

100 Gew.-Teile der Polyolkomponente A4 (45 °C) und 48 Gew.-Teile von Isocyanat 1 (40 °C) wurden mit einer Niederdruckschuhmaschine (Gusbi) vermischt und diese Mischung in eine auf 35 °C temperierte Aluminiumform (200 x 200 x 10 mm) gegeben, die Form geschlossen und der so hergestellte Polyurethanintegralschaum nach 4 Minuten entformt.

### Reaktionsmischung 5:

100 Gew.-Teile der Polyolkomponente A5 (45 °C) und 52 Gew.-Teile von Isocyanat 1 (40 °C) wurden mit einer Niederdruckschuhmaschine (Gusbi) vermischt und diese Mischung in eine auf 35 °C temperierte Aluminiumform (200 x 200 x 10 mm) gegeben, die Form geschlossen und der so hergestellte Polyurethanintegralschaum nach 4 Minuten entformt.

Die mechanischen Eigenschaften der hergestellten Proben wurden nach 24 Stunden Lagerung gemäß den DIN 53504, 53512 und ISO 34-1 bestimmt und sind in Tabelle 2 aufgelistet.

**Tabelle 2**

| | Rkt.-mischung 1 | Rkt.-mischung 2 | Rkt.-mischung 3 | Rkt.-mischung 4 | Rkt.-mischung 5 |
|---|---|---|---|---|---|
| Formdichte (g/L) | 760 | 760 | 650 | 640 | 660 |
| Härte (Shore A) | 49 | 48 | 50 | 41 | 51 |
| Zugfestigkeit (N/mm²) | 5,5 | 6,3 | 4,6 | 3,6 | 5,7 |
| Bruchdehnung (%) | 473 | 416 | 571 | 314 | 393 |
| Weiterreißfestigkeit (N/mm) | 6,2 | 6,1 | 5,7 | 5,9 | 7,7 |
| Rückprallelastizität (%) | 51 | 46 | - | 46 | 42 |
| Haptik | minderwertig, plastikartig | angenehmsamtig | minderwertig, plastikartig | angenehmsamtig | angenehmsamtig |
| Dauerbiegeeigenschaften (mm) nach 100.000 Zyklen bei RT | 2,0 | 0,25 | 1,8 | < 1,0 | < 1,0 |
| Dauerbiegeeigenschaften (mm) nach 100.000 Zyklen bei -15 °C | - | - | 2,6 | < 1,0 | 1,2 |
| Reibungskoeffizient | 0,19 | 0,41 | - | - | - |

Tabelle 2 verdeutlicht, dass die Platten der Reaktionsmischungen 2 verbesserte Dauerbiegeeigenschaften bei Raumtemperatur und die Platten der Reaktionsmischungen 4 und 5 verbesserte Dauerbiegeeigenschaften bei Raumtemperatur und auch bei -15 °C als die entsprechenden Referenzen (1 und 3) aufweisen. Auch die haptischen Eigenschaften der Platten dieser Reaktionsmischungen sind deutlich angenehmer und samtiger als die entsprechenden Referenzen 1 und 3 bewertet. Ebenso wird deutlich, dass die Reibungskoeffizienten (Maß für die Nassrutschfestigkeit) der Platten der Reaktionsmischung 2 höher sind als die der entsprechenden Referenz 1.

## Patentansprüche

1. Geschäumtes Polyurethan, erhältlich durch Vermischen von
a) Polyisocyanaten
b) höhermolekulare Verbindungen mit gegenüber Isocyanatgruppen reaktiven Gruppen,
c) Feststoffpartikel, der ein radikalisch polymerisiertes Polymer ist und in b) dispergiert vorliegt,
d) Treibmittel,
e) gegebenenfalls Kettenverlängerungsmittel, Vernetzungsmittel oder Mischungen davon,
f) gegebenenfalls Katalysator und
g) gegebenenfalls sonstige Zusatzstoffe,
zu einer Reaktionsmischung und ausreagieren lassen der Reaktionsmischung, **dadurch gekennzeichnet, dass**
- der Anteil an Kettenverlängerungsmittel kleiner als 4 Gew.-%, bezogen auf das Gesamtgewicht der Komponenten a) bis f), ist,
- der Gehalt an Feststoffpartikeln größer 15 Gew.-%, bezogen auf das Gesamtgewicht der Komponenten a) bis f), ist und
- die mittlere Funktionalität der höhermolekularen Verbindungen mit gegenüber Isocyanatgruppen reaktiven Gruppen kleiner als 2,5 ist.

2. Geschäumtes Polyurethan nach Anspruch 1, **dadurch gekennzeichnet, dass** der Diolanteil der höhermolekularen Verbindungen mit gegenüber Isocyanatgruppen reaktiven Gruppen b) größer als 80 Gew.-%, bezogen auf das Gesamtgewicht der höhermolekularen Verbindungen mit gegenüber Isocyanatgruppen reaktiven Gruppen b), ist.

3. Geschäumtes Polyurethan nach Anspruch 1, **dadurch gekennzeichnet, dass** der Diolanteil der höhermolekularen Verbindungen mit gegenüber Isocyanatgruppen reaktiven Gruppen b) 100 Gew.-%, bezogen auf das Gesamtgewicht der höhermolekularen Verbindungen mit gegenüber Isocyanatgruppen reaktiven Gruppen b), ist.

4. Geschäumtes Polyurethan nach einem der Ansprüche 1 bis 3, **dadurch gekennzeichnet, dass** der Anteil an Kettenverlängerungsmittel kleiner als 3 Gew.-%, bezogen auf das Gesamtgewicht der Komponenten a) bis f) ist.

5. Geschäumtes Polyurethan nach einem der Ansprüche 1 bis 4, **dadurch gekennzeichnet, dass** die Rohdichte 150 bis 1100 g/L beträgt.

6. Integralschaumstoff, enthaltend ein geschäumtes Polyurethan gemäß einem der Ansprüche 1 bis 5.

7. Verwendung eines Integralschaumstoffs gemäß Anspruch 6 als Schuhsohle.

8. Verfahren zur Herstellung eines geschäumten Polyurethans, bei dem man
a) Polyisocyanate mit
b) höhermolekulare Verbindungen mit gegenüber Isocyanatgruppen reaktiven Gruppen,
c) Feststoffpartikeln, der ein radikalisch polymerisiertes Polymer ist und in b) dispergiert vorliegt,
d) Treibmitteln,
e) gegebenenfalls Kettenverlängerungsmittel, Vernetzungsmittel oder Mischungen davon,
f) gegebenenfalls Katalysator und
g) gegebenenfalls sonstige Zusatzstoffe,
zu einer Reaktionsmischung vermischt und ausreagieren lässt, wobei
- der Anteil an Kettenverlängerungsmittel kleiner als 4 Gew.-%, bezogen auf das Gesamtgewicht der Komponenten a) bis f), ist,
- der Gehalt an Feststoffpartikeln größer 15 Gew.-%, bezogen auf das Gesamtgewicht der Komponenten a) bis f), ist und
- die mittlere Funktionalität der höhermolekularen Verbindungen mit gegenüber Isocyanatgruppen reaktiven Gruppenkleiner als 2,5 ist.

## Claims

1. A foamed polyurethane obtainable by mixing
a) polyisocyanates,
b) relatively high molecular weight compounds having groups reactive toward isocyanate groups,
c) solid particle which is a free-radically polymerized polymer and is present dispersed in b),
d) blowing agents,
e) optionally chain extender, crosslinking agent or mixtures thereof,
f) optionally catalyst and
g) optionally other additives
to give a reaction mixture and allowing the reaction mixture to react to completion, wherein
- the proportion of chain extender is less than 4% by weight, based on the total weight of the components a) to f),
- the content of solid particles is greater than 15% by weight, based on the total weight of the components a) to f), and
- the average functionality of the relatively high molecular weight compounds having groups reactive toward isocyanate groups is less than 2.5.

2. The foamed polyurethane according to claim 1, wherein the proportion of diol in the relatively high molecular weight compounds having groups reactive toward isocyanate groups b) is greater than 80% by weight, based on the total weight of the relatively high molecular weight compounds having groups reactive toward isocyanate groups b) .

3. The foamed polyurethane according to claim 1, wherein the proportion of diol in the relatively high molecular weight compounds having groups reactive toward isocyanate groups b) is 100% by weight, based on the total weight of the relatively high molecular weight compounds having groups reactive toward isocyanate groups b).

4. The foamed polyurethane according to any of claims 1 to 3, wherein the proportion of chain extender is less than 3% by weight, based on the total weight of the components a) to f).

5. The foamed polyurethane according to any of claims 1 to 4, wherein the gross density is from 150 to 1100 g/l.

6. An integral foam comprising a foamed polyurethane according to any of claims 1 to 5.

7. The use of an integral foam according to claim 6 as a shoe sole.

8. A process for the preparation of a foamed polyurethane, in which
a) polyisocyanates are mixed with
b) relatively high molecular weight compounds having groups reactive toward isocyanate groups,
c) solid particle which is a free-radically polymerized polymer and is present dispersed in b),
d) blowing agents,
e) optionally chain extender, crosslinking agent or mixtures thereof,
f) optionally catalyst and
g) optionally other additives
to give a reaction mixture and the latter is allowed to react to completion,
- the proportion of chain extender being less than 4% by weight, based on the total weight of the components a) to f),
- the content of solid particles being greater than 15% by weight, based on the total weight of the components a) to f), and
- the average functionality of the relatively high molecular weight compounds having groups reactive toward isocyanate groups being less than 2.5.

## Revendications

1. Polyuréthane moussé, pouvant être obtenu par mélange
a) de polyisocyanates
b) de composés de haut poids moléculaire, présentant des groupes réactifs par rapport aux groupes isocyanate,
c) de particule solide, qui est un polymère polymérisé par voie radicalaire et se trouve sous forme dispersée dans b),
d) d'agents gonflants,
e) le cas échéant d'agents d'allongement de chaîne, de réticulants ou de leurs mélanges,
f) le cas échéant d'un catalyseur et
g) le cas échéant d'autres additifs,
en un mélange réactionnel et par le fait de laisser réagir le mélange réactionnel, **caractérisé en ce que**
- la proportion d'agent d'allongement de chaîne est inférieure à 4% en poids, par rapport au poids total des composants a) à f),
- la teneur en particules solides est supérieure à 15% en poids, par rapport au poids total des composants a) à f),
- la fonctionnalité moyenne des composés de haut poids moléculaire présentant des groupes réactifs par rapport aux groupes isocyanate est inférieure à 2,5.

2. Polyuréthane moussé selon la revendication 1, **caractérisé en ce que** la proportion de diol des composés b) de haut poids moléculaire présentant des groupes réactifs par rapport aux groupes isocyanate est supérieure à 80% en poids, par rapport au poids total des composés b) de haut poids moléculaire présentant des groupes réactifs par rapport aux groupes isocyanate.

3. Polyuréthane moussé selon la revendication 1, **caractérisé en ce que** la proportion de diol des composés b) de haut poids moléculaire présentant des groupes réactifs par rapport aux groupes isocyanate est de 100% en poids, par rapport au poids total des composés b) de haut poids moléculaire présentant des groupes réactifs par rapport aux groupes isocyanate.

4. Polyuréthane moussé selon l'une quelconque des revendications 1 à 3, **caractérisé en ce que** la proportion d'agents d'allongement de chaîne est inférieure à 3% en poids, par rapport au poids total des composants a) à f).

5. Polyuréthane moussé selon l'une quelconque des revendications 1 à 4, **caractérisé en ce que** la densité brute est de 150 à 1100 g/l.

6. Mousse à peau intégrée, contenant un polyuréthane moussé selon l'une quelconque des revendications 1 à 5.

7. Utilisation d'une mousse à peau intégrée selon la revendication 6 comme semelle de chaussure.

8. Procédé pour la préparation d'un polyuréthane moussé, dans lequel on mélange
a) des polyisocyanates avec
b) des composés de haut poids moléculaire, présentant des groupes réactifs par rapport aux groupes isocyanate,
c) de particule solide, qui est un polymère polymérisé par voie radicalaire et se trouve sous forme dispersée dans b),
d) des agents gonflants,
e) le cas échéant des agents d'allongement de chaîne, des réticulants ou leurs mélanges,
f) le cas échéant un catalyseur et
g) le cas échéant d'autres additifs,
en un mélange réactionnel et on le laisse réagir,
- la proportion d'agent d'allongement de chaîne étant inférieure à 4% en poids, par rapport au poids total des composants a) à f),
- la teneur en particules solides étant supérieure à 15% en poids, par rapport au poids total des composants a) à f),
- la fonctionnalité moyenne des composés de haut poids moléculaire présentant des groupes réactifs par rapport aux groupes isocyanate étant inférieure à 2, 5.
